# EUROPÄISCHE PATENTSCHRIFT

(11) **EP 0 788 587 B1**
(45) Veröffentlichungstag und Bekanntmachung des Hinweises auf die Patenterteilung: **27.05.1998**
(21) Anmeldenummer: 95935947.2
(22) Anmeldetag: 18.10.1995
(51) Int. Cl.: F16D 3/62, F16C 7/00

(54) **VERFAHREN ZUM HERSTELLEN VON GELENKSCHEIBEN**
PROCESS FOR MANUFACTURING JOINT DISKS
PROCEDE DE FABRICATION DE RONDELLES DE CARDAN

(30) Priorität: 24.10.1994 DE 4437989
(43) Veröffentlichungstag der Anmeldung: 13.08.1997
(73) Patentinhaber: SGF SÜDDEUTSCHE GELENKSCHEIBENFABRIK GMBH & CO. KG., 84478 Waldkraiburg (DE)
(72) Erfinder: ANDRÄ, Rainer, D-65554 Limburg (DE); HINGERL, Anton, D-84577 Tüssling (DE); NINDEL, Wolfgang, D-84453 Mühldorf (DE)
(74) Vertreter: Goetz, Rupert, Dipl.-Ing.
(86) Internationale Anmeldenummer: EP9504098
(87) Internationale Veröffentlichungsnummer: WO9612898

(56) Entgegenhaltungen:
- FR-A- 2 636 386
- GB-A- 752 815
- GB-A- 2 082 716

## Beschreibung

Die Erfindung betrifft ein Verfahren nach dem Oberbegriff des Patentanspruchs 1.

Schlingenpakete für Gelenkscheiben werden üblicherweise aus Fäden oder Bändern gewickelt, dann in flüssigem Gummi imprägniert, und dieser wird getrocknet, jedoch nicht vulkanisiert. Dann werden die Schlingenpakete in eine Form eingelegt, in der sie auf Befestigungsmittel, insbesondere Büchsen oder Nieten, aufgesteckt und dann gemeinsam in gummielastisches Material eingebettet werden, das schließlich vulkanisiert wird. Es ist zwar üblich, den von den Schlingenpaketen eingenommenen Raum, ehe die Form mit gummielastischem Material ausgefüllt wird, in axialer Richtung durch Scheiben zu begrenzen, die beispielsweise auf die Befestigungsmittel aufgerastet werden können (DE 43 04 274 C1); dadurch lassen sich aber Form und Lage der Schlingenpakete auf dem größten Teil ihrer Länge, vor allem in ihren im wesentlichen geradlinigen Bereichen, nur grob festlegen. Wegen Schwankungen im Fertigungsverfahren sind Umhüllungswanddicken notwendig, die in der Größenordnung der Querschnittsabmessungen der Schlingenpakete liegen. Daraus ergeben sich entsprechende Schwankungen in Funktionsparametern (z. B. Kennlinie und Lebensdauer) der Gelenkscheiben.

Es ist zwar bekannt (WO 92/14 597), Gelenkscheiben in der Weise herzustellen, daß als Befestigungsmittel dienende Hülsen und etwaige weitere starre Teile mittels einer Kunststoffeinspritzvorrichtung zu einem Skelett zusammengefaßt und dieses sodann mit Kautschuk umspritzt wird, der anschließend vulkanisiert wird. Dabei soll aber das sonst beim Herstellen von Gelenkscheiben übliche Wickeln und Einlegen von Schlingenpaketen vermieden werden, indem diese durch das Kunststoffskelett ersetzt werden. In zahlreichen Anwendungsfällen soll jedoch auf Schlingenpakete nicht verzichtet werden. Dies gilt vor allem für Gelenkscheiben im Antriebsstrang sowie im Lenkgestänge von Kraftfahrzeugen.

Der Erfindung liegt deshalb die Aufgabe zugrunde, ein Verfahren der eingangs genannten Gattung derart weiterzubilden, daß die Wanddicke des gummielastischen Materials, in das die Schlingenpakete eingebettet werden, und das schließlich vulkanisiert wird, vermindert werden kann.

Die Aufgabe ist erfindungsgemäß mit den Merkmalen des kennzeichnenden Teils des Patentanspruchs 1 gelöst.

Die Schlingenpakete werden zunächst einzeln oder gruppenweise in einer zu ihrer äußeren Geometrie unter Berücksichtigung von Fertigungstoleranzen komplementären Form mit thermoplastischem oder elastischem Material umspritzt. Bei entsprechender Gestaltung der Spritzform können zum Umspritzen örtlich unterschiedliche Werkstoffe eingesetzt und/oder nur Teile der Schlingenpakete umspritzt werden. In jedem Fall werden die Schlingenpakete oder Gruppen von Schlingenpaketen, die einen vollständigen Kranz darstellen können, durch das Umspritzen form- und maßgenaue Bauteile mit definierten Wanddicken, welche die Größenordnung des Fadendurchmessers der Schlingenpakete haben können. Dies bedeutet eine Reduzierung der Kennlinien- und Lebensdauerstreuungen sowie des Materialeinsatzes.

Vorteilhafte Weiterbildungen der Erfindung ergeben sich aus den Unteransprüchen.

Ausführungsbeispiele der Erfindung werden im folgenden anhand schematischer Zeichnungen mit weiteren Einzelheiten erläutert. Es zeigen, jeweils in Schrägansicht:
- Fig. 1: ein einzelnes Schlingenpaket,
- Fig. 2: einen Teil desselben Schlingenpakets in aufgeschnittenem Zustand,
- Fig. 3: zwei verbundene Schlingenpakete und
- Fig. 4: drei gemeinsam umspritzte Schlingenpakete, von denen zwei übereinanderliegen.

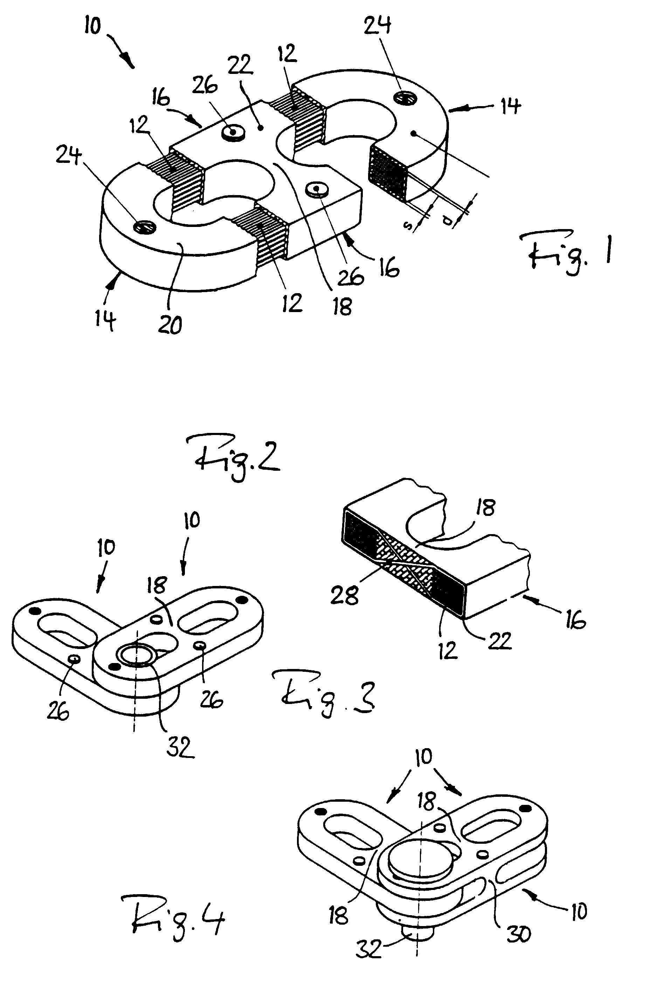

Das in Fig. 1 dargestellte Schlingenpaket 10 ist aus Fäden 12 als langgestrecktes Oval gewickelt; es hat zwei halbkreisförmige Endbereiche 14, die durch geradlinige mittlere Bereiche 16 miteinander verbunden sind. Die beiden mittleren Bereiche 16 sind durch eine querliegende Brücke 18 miteinander verbunden.

Das Schlingenpaket 10 ist in einer nicht dargestellten Spritzform positioniert und teilweise umspritzt worden, wodurch das Schlingenpaket in seinen beiden halbkreisförmigen Endbereichen 14 je eine Umhüllung 20 erhalten hat und in seinen geradlinigen mittleren Bereichen 16 eine Umhüllung 22, die zugleich die Brücke 18 bildet. Von dem Spritzvorgang sind, wie am Beispiel der Umhüllungen 20 dargestellt, Vertiefungen 24 in Bereichen zurückgeblieben, in denen das Schlingenpaket 10 von inneren Vorsprüngen der Spritzform positioniert worden ist. Außerdem weist das umspritzte Schlingenpaket 10, wie am Beispiel der Umhüllung 22 dargestellt, Warzen 26 auf, die als Materialreserve und zur späteren Positionierung des umspritzten Schlingenpakets in einer Form dienen, in der anschließend ausvulkanisiert wird.

Die Brücke 18 kann, wie in Fig. 2 dargestellt, eine Querarmierung 28 aus Faden, Draht oder Band aufweisen, die zweckmäßigerweise, wie dargestellt, kreuzförmig angeordnet ist.

In ähnlicher Weise wie die geradlinigen mittleren Bereiche 16 eines und desselben Schlingenpakets 10 durch die dargestellte Brücke 18 miteinander verbunden sein können, lassen sich die geradlinigen mittleren Bereiche 16 zweier im wesentlichen deckungsgleich übereinander angeordneter Schlingenpakete 10 gemäß Fig. 4 durch einen Steg 30 miteinander verbinden, der beim gemeinsamen Umspritzen dieser beiden Schlingenpakete gebildet wird und ebenfalls eine Armierung ähnlich der Querarmierung 30 enthalten kann.

Die auf diese Weise einzeln oder in Paaren oder größeren Gruppen übereinanderliegend gemeinsam umspritzten Schlingenpakete 10 werden gemäß Fig. 3 und 4 durch Befestigungsmittel 32 miteinander verbunden, die zur späteren Befestigung der fertigen Gelenkscheibe an Wellenflanschen dienen. Als Befestigungsmittel 32 können beispielsweise gemäß Fig. 3 Buchsen oder gemäß Fig. 4 Niete vorgesehen sein.

## Patentansprüche

1. Verfahren zum Herstellen von Gelenkscheiben mit ringförmigen Schlingenpaketen (10) zur Übertragung von Zugkräften zwischen Befestigungsmitteln (32), bei dem die Schlingenpakete (10) und Befestigungsmittel (32) zu einem Kranz zusammengefügt und anschließend in gummielastisches Material eingebettet werden,
dadurch gekennzeichnet, daß mindestens einzelne Schlingenpakete (10) mindestens in einzelnen Bereichen mit einer Umhüllung (20, 22) aus elastomerem Material umspritzt werden, die mindestens ihren äußeren Umriß bestimmt und stabilisiert, wobei das elastomere Material höchstens teilweise ausvulkanisiert wird, ehe der Kranz vollständig in das gummielastische Material eingebettet und dieses dann ausvulkanisiert wird.

2. Verfahren nach Anspruch 1,
dadurch gekennzeichnet, daß ungefähr halbkreisförmige Endbereiche (14) der Schlingenpakete (10) mit je einer Umhüllung (20) umspritzt werden.

3. Verfahren nach Anspruch 1 oder 2,
dadurch gekennzeichnet, daß ungefähr geradlinige mittlere Bereiche (16) der Schlingenpakete (10) mit einer Umhüllung (22) umspritzt und dabei durch mindestens eine Brücke (18) miteinander verbunden werden.

4. Verfahren nach Anspruch 3,
dadurch gekennzeichnet, daß die ungefähr geradlinigen mittleren Bereiche (16) der Schlingenpakete (10) vor dem Umspritzen durch eine Querarmierung (28) miteinander verbunden werden.

5. Verfahren nach einem der Ansprüche 1 bis 4,
dadurch gekennzeichnet, daß mindestens zwei im wesentlichen deckungsgleich übereinander angeordnete Schlingenpakete (10) gemeinsam umspritzt und dabei in ungefähr geradlinigen mittleren Bereichen (16) durch mindestens einen Steg (30) miteinander verbunden werden.

6. Verfahren nach einem der Ansprüche 1 bis 5,
dadurch gekennzeichnet, daß an den Umhüllungen (20, 22) Materialanhäufungen (26) zur Positionierung der Schlingenpakete (10) beim Einbetten in das gummielastische Material und/oder als Materialreserve zum Verhindern von Fehlstellen ausgebildet werden.

## Claims

1. A method for manufacturing flexible disks with annular loop packets (10) for the transmission of traction forces between fastening means (32), wherein the loop packets (10) and the fastening means (32) are combined to a ring and then embedded in rubber-elastic material,
characterized in that at least individual loop packets (10) are injection-coated at least in certain areas by a coating (20, 22) of an elastomer material, which coating defines and stabilizes at least their outer contour, with the elastomer material being at most partially vulcanized before the ring is completely embedded in the rubber-elastic material and the latter is then vulcanized.

2. The method according to Claim 1,
characterized in that approximately semi-circular end portions (14) of the loop packets (10) are injection-coated with a coating (20) each.

3. The method according to Claim 1 or 2,
characterized in that approximately straight central portions (16) of the loop packets (10) are injection-coated with a coating (22) and thereby connected to each other by means of at least one bridge (18).

4. The method according to Claim 3,
characterized in that the approximately straight central portions (16) of the loop packets (10) are connected to each other by means of a transverse reinforcement (28) prior to the injection coating.

5. The method according to one of Claims 1 through 4,
characterized in that at least two essentially congruent superposed loop packets (10) are commonly injection-coated and thereby connected to each other in approximately straight central portions (16) by means of at least one web (30).

6. The method according to one of Claims 1 through 5,
characterized in that material accumulations (26) are formed at the coatings (20, 22) for positioning the loop packets (10) when they are embedded in the rubber-elastic material and/or as a material reserve to prevent voids.

## Revendications

1. Procédé de fabrication de joints universels en caoutchouc comprenant des paquets de boucles (10) pour la transmission de forces de traction entre des moyens de fixation (32), dans lequel les paquets de boucles (10) et moyens de fixation (32) sont assemblés en une couronne et sont ensuite noyés dans un matériau élastique,
caractérisé en ce qu'au moins certains des paquets de boucles (10) sont enrobés dans au moins certaines zones d'une gaine (20, 22) en matériau élastomère qui détermine et stabilise au moins leur contour extérieur, le matériau élastomère étant tout au plus partiellement vulcanisé complètement avant que la couronne soit complètement noyée dans le matériau élastique et que celui-ci soit alors complètement vulcanisé.

2. Procédé selon la revendication 1,
caractérisé en ce que des zones d'extrémité (14) à peu près demi-circulaires des paquets de boucles (10) sont enrobées chacune d'une gaine (20).

3. Procédé selon la revendication 1 ou 2,
caractérisé en ce que des zones centrales (16) à peu près rectilignes des paquets de boucles (10) sont enrobées d'une gaine (22) et sont reliées à cette occasion l'une à l'autre par au moins un pont (18).

4. Procédé selon la revendication 3,
caractérisé en ce que les zones centrales (16) à peu près rectilignes des paquets de boucles (10) sont reliées entre elles par une armature transversale (28) avant d'être enrobées.

5. Procédé selon l'une quelconque des revendications 1 à 4,
caractérisé en ce qu'au moins deux paquets de boucles (10) sensiblement coïncidents disposés l'un au dessus de l'autre sont noyés ensemble et sont reliés entre eux à cette occasion dans les zones centrales (16) à peu près rectilignes par au moins une âme (30).

6. Procédé selon l'une quelconque des revendications 1 à 5,
caractérisé en ce que des accumulations de matière (26) sont formées sur les gaines (20, 22) pour positionner les paquets de boucles (10) lorsqu'ils sont noyés dans le matériau élastique et/ou comme réserve de matière pour empêcher les lacunes.
